# FASCICULE DE BREVET EUROPEEN

(11) **EP 1 558 770 B1**
(45) Date de publication et mention de la délivrance du brevet: **17.06.2009**
(21) Numéro de dépôt: 03794717.3
(22) Date de dépôt: 11.09.2003
(51) Int. Cl.: C21D 9/56, C21D 1/76

(54) **CONTROLE D'ATMOSPHERE PENDANT LE PROCEDE DE TRAITEMENT THERMIQUE DES BANDES METALLIQUES EN CONTINU**
ATMOSPHÄRENSTEUERUNG BEI DER KONTINUIERLICHEN WÄRMEBEHANDLUNG VON METALLBÄNDERN
ATMOSPHERE CONTROL DURING CONTINUOUS HEAT TREATMENT OF METAL STRIPS

(30) Priorité: 13.09.2002 BE 200200539
(43) Date de publication de la demande: 03.08.2005
(73) Titulaire: Drever International S.A., 4031 Liège (Angleur) (BE)
(72) Inventeur: RAICK, Jean-Marc, B-4020 Liège (BE); CRUTZEN, Jean-Pierre, B-4053 Embourg (BE); DOSOGNE, Edgard, B-4590 Ouffet (BE); RENARD, Michel, B-4450 Slins (BE)
(74) Mandataire: Claeys, Pierre
(86) Numéro de dépôt international: PCT/BE2003/000149
(87) Numéro de publication internationale: WO 2004/024959

(56) Documents cités:
- EP-A- 0 379 104
- EP-A- 0 979 879
- US-A- 4 966 632
- US-A- 5 137 586
- PATENT ABSTRACTS OF JAPAN vol. 1996, no. 01, 31 janvier 1996 (1996-01-31) -& JP 07 233420 A (TOSHIBA CORP), 5 septembre 1995 (1995-09-05)
- PATENT ABSTRACTS OF JAPAN vol. 2002, no. 05, 3 mai 2002 (2002-05-03) -& JP 2002 003953 A (SUMITOMO METAL IND LTD), 9 janvier 2002 (2002-01-09)

## Description

La présente invention est relative à un procédé de traitement thermique de bande métallique comprenant, à l'intérieur d'une enceinte de traitement thermique présentant une pression supérieure à la pression atmosphérique,
- un passage de la bande au travers d'au moins une zone de chauffage de l'enceinte,
- un défilement de la bande au travers d'au moins une zone de refroidissement de l'enceinte,
- un établissement d'une première atmosphère de gaz protecteur contenant de l'azote et une première teneur en hydrogène et/ou hélium dans l'enceinte, à l'exception d'au moins une zone de refroidissement, dans laquelle est ajustée une deuxième atmosphère de gaz protecteur contenant de l'azote et une deuxième teneur en hydrogène et/ou hélium supérieure à ladite première tenseur, et
- au moins une introduction d'azote dans l'enceinte, au moins dans ladite au moins une zone de chauffage de celle-ci.

On connaît depuis longtemps des fours de traitement de bandes ou tôles défilant en continu. On en utilise par exemple pour le recuit en continu ou pour la galvanisation en continu de bandes d'acier, ainsi que d'autres types d'installations où les bandes sont traitées sous une atmosphère protectrice.

Ces fours peuvent contenir une ou plusieurs zones de chauffage, avec de préférence une zone de maintien à température, ainsi qu'une ou plusieurs zones de refroidissement, éventuellement séparées par une zone de survieillissement ou d'égalisation.

Pour protéger la tôle en défilement contre toute oxydation, il est connu de protéger celle-ci par un gaz d'atmosphère qui peut être de l'azote, ou un mélange d'azote et d'une faible teneur d'hydrogène et/ou d'hélium. Simultanément ce gaz d'atmosphère permet de maintenir dans l'enceinte du four une pression légèrement supérieure à la pression atmosphérique.

Etant donné le bon transfert thermique entre la bande à haute température et le gaz hydrogène ou le gaz hélium, on a déjà prévu d'ajuster, dans une zone de refroidissement rapide ou de trempe, une atmosphère de gaz protecteur contenant un mélange d'azote et d'hydrogène et/ou hélium avec une teneur nettement supérieure en hydrogène et/ou hélium par rapport à celle de l'atmosphère régnant dans le reste de l'enceinte (v. par exemple JP-55-1969, FR-A-2375334, EP-B-0 795 616 et EP-B-0 815 268).

Le contrôle de l'atmosphère dans la zone de chauffage et/ou dans la zone de refroidissement selon de valeurs de variables physiques (pression et/ou teneur) pour un mélange N₂ et H₂ est connu dans l'art antérieur, voir par exemple JP7233420 A, JP2002003953 A ou US 5137586 A

Ces installations nécessitent un cloisonnement rigoureux et aussi étanche que possible entre la zone de refroidissement et le reste de l'enceinte, ce qui implique l'application de dispositifs d'étanchéité complexes et coûteux à l'entrée et à la sortie de cette zone. Ces dispositifs comportent généralement des joints entre lesquels la bande doit passer, avec risque d'endommagement de la bande, et des sas où du gaz inerte est injecté. Par ailleurs, toutes ces installations doivent impérativement prévoir un ou plusieurs mélangeurs où, d'une part, hydrogène et/ou hélium et, d'autre part, azote sont mélangés dans les différentes proportions voulues avant l'introduction des mélanges gazeux dans leur zone respective. Il en résulte donc ici aussi une augmentation du coût global de l'installation et un encombrement supplémentaire, non négligeable, de celle-ci par la présence de ces mélangeurs.

US 4966632 A (FR 2628753 A) divulgue le contrôle de débit d' azote injecté dans les zones d'entrée et de refroidissement en accord avec la teneur en hydrogène et la valeur de la pression dans la zone chaude.

EP 379104 A divulgue l'introduction séparée d'hydrogène et d'azote dans de zones différentes du four, le contrôle de débit d' azote et d'hydrogène injecté est fait en accord avec la valeur de la pression dans la zone chaude.

La présente invention a pour but de résoudre ces problèmes par la mise au point d'un procédé de traitement thermique de bande métallique sous atmosphère de gaz protecteur qui permette un refroidissement efficace de la bande et soit simple et d'un coût abordable.

On a résolu ces problèmes, suivant l'invention selon la revendication 1, par un procédé qui comprend :
- au moins une injection de gaz protecteur contenant une troisième teneur en hydrogène et/ou hélium supérieure à ladite deuxième teneur dans ladite au moins une zone de refroidissement présentant ladite deuxième atmosphère,
- un échange gazeux entre au moins une zone de l'enceinte présentant ladite première atmosphère de gaz protecteur et ladite au moins une zone de refroidissement présentant ladite deuxième atmosphère, des mesures, dans chaque zone, de débit de gaz entrant, de pression et de teneur en hydrogène et/ou hélium, et
- à l'aide de ces mesures, un contrôle de débit de ladite au moins une introduction et de ladite au moins une injection en fonction de la pression requise dans les zones de l'enceinte et des teneurs d'hydrogène et/ou hélium à obtenir dans lesdites première et deuxième atmosphères de gaz protecteur.

Ce procédé offre l'avantage de ne pas nécessiter de système de cloisonnement étanche entre zones de l'enceinte puisqu'au contraire on recherche l'échange gazeux entre les zones, et il ne prévoit aucun prémélange de gaz différents avant leur introduction dans l'enceinte. En outre, il n'y a pas de consommation supplémentaire de gaz hydrogène et/ou hélium puisque le taux global reste le taux usuellement utilisé pour ce type d'installation. D'autre part, le gaz hydrogène et/ou hélium est maintenu en proportion plus importante dans la zone de refroidissement, ce qui permet d'améliorer l'efficacité du refroidissement et de réduire toute oxydation causée par des infiltrations parasites d'air au niveau des joints et des gaines.

Par gaz azote, dans l'étape d'introduction, il faut entendre non seulement un gaz pur, mais aussi un gaz industriel mis sur le marché comme gaz azote, et pouvant contenir en faibles proportions d'autres éléments, notamment de l'hydrogène ou de l'hélium.

Avantageusement, le gaz protecteur contenant ladite troisième teneur en hydrogène et/ou hélium est du gaz hydrogène gaz hélium ou un mélange de ceux-ci. Il faut entendre par gaz hydrogène ou gaz hélium non seulement un gaz pur mais aussi un gaz industriel mis sur le marché comme gaz hydrogène ou hélium, mais pouvant contenir en faibles proportions d'autres éléments. On peut aussi comprendre un gaz contenant de l'hydrogène et de l'azote qui est issu directement d'un processus industriel, mais sans qu'il y ait un mélange des deux éléments. Par exemple on peut obtenir un tel gaz par craquage d'ammoniac NH₃ en un produit qui contient 75 % de H₂ et 25 % de N₂.

Suivant une forme avantageuse de réalisation du procédé suivant l'invention, il comprend dans ladite au moins une zone de refroidissement présentant ladite deuxième atmosphère une aspiration du gaz protecteur dans un circuit de recirculation, son refroidissement et sa remise en circulation dans cette au moins une zone à partir dudit circuit.

Suivant une forme perfectionnée de réalisation du procédé suivant l'invention, par ledit contrôle de débit, il comprend, dans ladite au moins une zone de refroidissement présentant ladite deuxième atmosphère, un maintien d'une pression supérieure à la pression de l'enceinte en dehors de cette zone de refroidissement.

D'autres formes de réalisation de l'invention sont indiquées dans les revendications annexées.

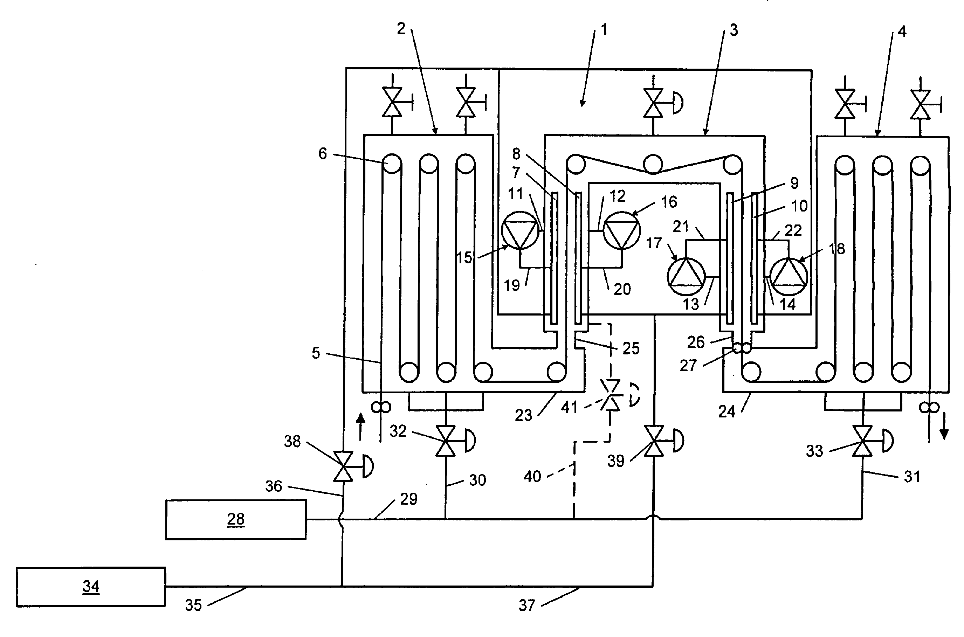

D'autres détails et particularités de l'invention ressortiront de la description donnée ci-après, à titre non limitatif et avec référence avec la figure annexée, d'une installation permettant la mise en oeuvre d'une variante de procédé suivant l'invention.

La figure unique représente de manière schématique un four de recuit continu de tôle dans une atmosphère de gaz protecteur.

Un four de recuit continu de tôles d'acier au défilé est généralement constitué, dans le sens d'avancement du produit, des sections suivantes : préchauffage, chauffage, maintien en température, refroidissement par jets de gaz, survieillissement ou égalisation et refroidissement final.

Sur la figure unique on a représenté uniquement la partie centrale du four 1 avec une section de maintien en température 2, une section de refroidissement rapide 3 et une section de survieillissement 4. Les autres sections ont été omises pour une facilité de lecture de la figure. La tôle 5 défile dans ces sections suivant le sens des flèches.

Dans les sections 2 et 4, la tôle est amenée à défiler verticalement en tournant autour de rouleaux de renvoi 6. Dans la section de refroidissement 3, un système de recirculation intense de gaz d'atmosphère est mis en oeuvre. Ce système comprend, dans l'exemple illustré, deux zones successives de refroidissement contenant chacune deux caissons d'injection de gaz sur la tôle 7, 8 et 9, 10 placés de part et d'autre de la tôle, ces caissons étant munis de buses ou fentes pour le soufflage de gaz sur la tôle. Le système de recirculation comprend en outre un conduit d'aspiration 11-14, muni en 15-18 d'un ventilateur et d'un échangeur de chaleur, ainsi qu'un conduit de refoulement 19-22 relié au caisson correspondant.

Les différentes sections 2 et 3 ainsi que 3 et 4 sont mutuellement reliées par un tunnel de liaison 23 ou 24, présentant de préférence un étranglement 25 ou 26. Ces tunnels ne peuvent pas être prévus étanches et doivent donc, suivant l'invention, permettre un échange gazeux entre les sections. Si des rouleaux de guidage, par exemple les rouleaux 27, peuvent être prévus dans ces tunnels ou étranglements ils ne peuvent en aucun cas servir à étanchéifier ceux-ci.

Les sections 2 et 4 sont alimentées en gaz d'atmosphère depuis la source 28, qui, dans l'exemple illustré, est une source de gaz azote pur. Cette source est reliée par les conduits 29, 30 et 31 aux différentes sections, par l'intermédiaire de vannes 32 et 33. Le débit peut être réglé à la source 28 ou par exemple par l'intermédiaire des vannes 32 et 33.

La section 3 est alimentée en gaz d'atmosphère depuis la source 34 qui, dans l'exemple illustré, est une source de gaz hydrogène pur. Cette source est reliée par les conduits 35 à 37 aux caissons 7 à 10 de la section de refroidissement 3, par l'intermédiaire de vannes 38 et 39. Le débit peut être réglé à la source 34 ou par exemple par l'intermédiaire des vannes 38 et 39. Les conduits 35 à 37 peuvent introduire le gaz protecteur en d'autres endroits que le caisson, par exemple directement dans la section de refroidissement ou avantageusement dans le circuit de recirculation, en amont du ventilateur correspondant.

Comme représenté en traits interrompus, il est aussi envisageable d'alimenter à partir de la source 28 du gaz azote dans la section 3, par exemple par l'intermédiaire du conduit 40 de la vanne 41.

Le fonctionnement de ce four est le suivant :

Dans les sections 2 et 4 du four, de l'azote pur est injecté depuis la source 28, le débit étant asservi sur la pression qui doit de préférence régner dans ces chambres. Il est préférable que la pression soit supérieure à la pression atmosphérique pour empêcher au maximum toute infiltration d'air extérieur à l'intérieur de l'enceinte.

On peut ainsi prévoir d'obtenir dans ces sections une pression de 1 à 3 mbar, par exemple de l'ordre de 1,5 mbar.

Dans la section de refroidissement, on injecte depuis la source 34 de l'hydrogène pur.

Dans chaque section une instrumentation connue est prévue pour mesurer le débit de gaz entrant, la pression et le taux d'hydrogène.

La totalité des débits d'azote et d'hydrogène introduits dans l'enceinte est avantageusement de l'ordre de 400 à 1000 Nm³/h, suivant la taille de l'enceinte.

Le système de recirculation intense de la section de refroidissement 3 a un débit de 1000 à 5000 fois le débit de gaz d'atmosphère total introduit dans l'enceinte du four. Il y a donc un mélange instantané de l'hydrogène injecté dans le volume recirculé, étant donné le rapport important entre débit injecté et/ou introduit dans l'enceinte (N₂ + H₂) et le débit recirculé.

Par contrôle du débit d'injection d'hydrogène dans la section de refroidissement, il est possible de régler immédiatement la teneur en H₂ requise, par exemple à un ordre de grandeur de 5 à 25 % en volume, éventuellement même de 50 % en volume. On peut par exemple après remplissage de l'enceinte par de l'azote, injecter l'hydrogène dans la section de refroidissement. On peut aussi, simultanément à l'introduction d'azote dans les sections 2 et 4, injecter séparément, dans la section de refroidissement, de l'azote (par le conduit 40) et de l'hydrogène (par les conduits 36 et 37) dans les proportions voulues, leur mélange étant, comme indiqué ci-dessus, instantané grâce au système de recirculation.

Le débit d'hydrogène dans la section de refroidissement ou les débits séparés d'hydrogène et d'azote dans cette section peuvent être déterminés et asservis en fonction d'une pression requise, de préférence supérieure à celle des autres zones, et par exemple égale à 3 mbar, et en fonction du taux d'hydrogène moyen demandé dans le reste du four.

En fonctionnement, le taux d'hydrogène dans la section de refroidissement peut être modifié en faisant varier le débit d'injection d'hydrogène. Les taux d'hydrogène avant et après la section de refroidissement peuvent être contrôlés en modifiant les débits d'introduction d'azote dans ces sections amont et aval, et donc les pressions qui y règnent. Par exemple, si on augmente la pression en amont de la zone de refroidissement par rapport à celle en aval de cette zone, le mélange azote-hydrogène présent dans la section de refroidissement diffusera préférentiellement dans la zone aval et y augmentera le taux d'hydrogène.

D'une manière générale, dans les sections du four autres que celles de refroidissement on peut prévoir un taux d'hydrogène de l'ordre de 3 à 5 % en volume.

## Revendications

1. Procédé de traitement thermique de bande métallique comprenant, à l'intérieur d'une enceinte de traitement thermique présentant une pression supérieure à la pression atmosphérique,
- un passage de la bande au travers d'au moins une zone de chauffage de l'enceinte,
- un défilement de la bande au travers d'au moins une zone de refroidissement de l'enceinte,
- un établissement d'une première atmosphère de gaz protecteur contenant de l'azote et une première teneur en hydrogène et/ou hélium dans l'enceinte, à l'exception d'au moins une zone de refroidissement, dans laquelle est ajustée une deuxième atmosphère de gaz protecteur contenant de l'azote et une deuxième teneur en hydrogène et/ou hélium supérieure à ladite première teneur, et
- au moins une introduction d'azote dans l'enceinte, au moins dans ladite au moins une zone de chauffage de celle-ci,
**caractérisé en ce qu'**il comprend
- au moins une injection de gaz protecteur contenant une troisième teneur en hydrogène et/ou hélium supérieure à ladite deuxième teneur dans ladite au moins une zone de refroidissement présentant ladite deuxième atmosphère,
- un échange gazeux entre au moins une zone de l'enceinte présentant ladite première atmosphère de gaz protecteur et ladite au moins une zone de refroidissement présentant ladite deuxième atmosphère
- des mesures, dans chaque zone, de débit de gaz entrant, de pression et de teneur en hydrogène et/ou hélium, et
- à l'aide de ces mesures, un contrôle de débit de ladite au moins une introduction et de ladite au moins une injection en fonction de la pression requise dans les zones de l'enceinte et des teneurs d'hydrogène et/ou hélium à obtenir dans lesdites première et deuxième atmosphères de gaz protecteur.

2. Procédé suivant la revendication 1, **caractérisé en ce que** le gaz protecteur contenant ladite troisième teneur en hydrogène et/ou hélium est du gaz hydrogène, du gaz hélium, ou un mélange de ceux-ci.

3. Procédé suivant la revendication 1, **caractérisé en ce que** le gaz protecteur contenant ladite troisième teneur en hydrogène est un gaz contenant de l'hydrogène et de l'azote issu directement d'un processus industriel, sans étape de mélange préalable.

4. Procédé suivant la revendication 3, **caractérisé en ce que** le gaz contenant de l'hydrogène et de l'azote est un gaz de craquage d'ammoniac.

5. Procédé suivant l'une des revendications 1 à 4, **caractérisé en ce qu'**il comprend ladite au moins une introduction d'azote dans l'enceinte uniquement en dehors de ladite au moins une zone de refroidissement présentant ladite deuxième atmosphère.

6. Procédé suivant l'une des revendications 1 à 4, **caractérisé en ce qu'**il comprend ladite au moins une introduction d'azote dans l'enceinte simultanément en dehors de ladite au moins une zone de refroidissement présentant ladite deuxième atmosphère et dans cette zone.

7. Procédé suivant l'une quelconque des revendications 1 à 6, **caractérisé en ce que** ladite première atmosphère contient une teneur en hydrogène et/ou hélium de 3 à 5 % en volume.

8. Procédé suivant l'une quelconque des revendications 1 à 7, **caractérisé en ce que** ladite deuxième atmosphère contient une teneur en hydrogène et/ou hélium de 5 à 25 % en volume.

9. Procédé suivant l'une quelconque des revendications 1 à 8, **caractérisé en ce que** la pression dans l'enceinte est de 1 à 3 mbar.

10. Procédé suivant l'une quelconque des revendications 1 à 9, **caractérisé en ce qu'**il comprend dans ladite au moins une zone de refroidissement présentant ladite deuxième atmosphère une aspiration du gaz protecteur dans un circuit de recirculation, son refroidissement et sa remise en circulation dans cette au moins une zone à partir dudit circuit.

11. Procédé suivant l'une quelconque des revendications 1 à 10, **caractérisé en ce que** le débit total de gaz d'atmosphère injecté et introduit est de 400 à 1000 Nm³/h et **en ce que** le débit de gaz recirculé est de 1000 à 5000 fois le débit de gaz d'atmosphère injecté et introduit.

12. Procédé suivant l'une quelconque des revendications 1 à 11, **caractérisé en ce que**, par ledit contrôle de débit, il comprend, dans ladite au moins une zone de refroidissement présentant ladite deuxième atmosphère, un maintien d'une pression supérieure à la pression de l'enceinte en dehors de cette zone de refroidissement.

## Claims

1. Method for the heat treatment of metallic strips comprising, inside a heat treatment chamber having a pressure greater than atmospheric pressure,
- passing the strip through at least one heating zone of the chamber,
- moving the strip through at least one cooling zone of the chamber,
- establishing a first protective gas atmosphere containing nitrogen and a first hydrogen and/or helium content in the chamber, with the exception of at least one cooling zone, in which there is adjusted a second protective gas atmosphere containing nitrogen and a second hydrogen and/or helium content greater than the said first content, and
- at least one introduction of nitrogen into the chamber, at least into the said at least one heating zone thereof,
**characterised in that** it comprises
- at least one injection of protective gas containing a third hydrogen and/or helium content greater than the said second content into the said at least one cooling zone having the said second atmosphere,
- a gaseous exchange between at least one zone of the chamber having the said first atmosphere of protective gas and the said at least one cooling zone having the said second atmosphere,
- measurements, in each zone, of the ingoing gas flow rate, the pressure and the hydrogen and/or helium content,
- assisted by these measurement, control of the flow rate of the said at least one introduction and the said at least one injection according to the pressure required in the zones of the chamber and the hydrogen and/or helium contents to be obtained in the said first and second protective gas atmospheres.

2. Method according to Claim 1, **characterised in that** the protective gas containing the said third hydrogen and/or helium content is hydrogen gas, helium gas, or a mixture thereof.

3. Method according to Claim 1, **characterised in that** the protective gas containing the said third hydrogen content is a gas containing hydrogen and nitrogen issuing directly from an industrial process, without any prior mixing step.

4. Method according to Claim 3, **characterised in that** the gas containing hydrogen and nitrogen is an ammonia cracking gas.

5. Method according to one of Claims 1 to 4, **characterised in that** it comprises the said at least one introduction of nitrogen into the chamber solely outside the said at least one cooling zone having the said second atmosphere.

6. Method according to one of Claims 1 to 4, **characterised in that** it comprises the said at least one introduction of nitrogen into the chamber simultaneously outside the said at least one cooling zone having the said second atmosphere and in this zone.

7. Method according to any one of Claims 1 to 6, **characterised in that** the said first atmosphere contains a hydrogen and/or helium content of 3% to 5% by volume.

8. Method according to any one of Claims 1 to 7, **characterised in that** the said second atmosphere contains a hydrogen and/or helium content of 5% to 25% by volume.

9. Method according to any one of Claims 1 to 8, **characterised in that** the pressure in the chamber is 1 to 3 mbar.

10. Method according to any one of Claims 1 to 9, **characterised in that** it comprises, in the said at least one cooling zone having the said second atmosphere, an induction of protective gas into a recirculation circuit, its cooling and its putting back into circulation in this at least one zone from the said circuit.

11. Method according to any one of Claims 1 to 10, **characterised in that** total flow of atmosphere gas injected and introduced is 400 to 1000 Nm³/h and **in that** the flow of recirculated gas is 1000 to 5000 times the flow of atmosphere gas injected and introduced.

12. Method according to any one of Claims 1 to 11, **characterised in that**, through the said flow control, it comprises, in the said at least one cooling zone having the said second atmosphere, a maintenance of a pressure greater than the pressure in the chamber outside this cooling zone.

## Patentansprüche

1. Verfahren zur Wärmebehandlung von Metallbändern, das, im Inneren einer Wärmebehandlungskammer, die einen Druck aufweist, der höher als der Atmosphärendruck ist, Folgendes umfasst:
- einen Durchlauf des Bands durch mindestens eine Heizzone der Kammer,
- einen Ablauf des Bands durch mindestens eines Kühlzone der Kammer,
- eine Herstellung einer ersten Schutzgasatmosphäre, die Stickstoff und einen ersten Wasserstoff- und/oder Heliumanteil enthält, in der Kammer, mit Ausnahme mindestens einer Kühlzone, in der eine zweite Schutzgasatmosphäre eingerichtet wird, die Stickstoff und einen zweiten Wasserstoff- und/oder Heliumanteil enthält, der größer als der erste Anteil ist, und
- mindestens eine Einführung von Stickstoff in die Kammer, mindestens in der mindestens einen Heizzone dieser,
**dadurch gekennzeichnet, dass** es Folgendes umfasst:
- mindestens eine Injektion von Schutzgas, das einen dritten Wasserstoff- und/oder Heliumanteil enthält, der größer als der zweite Anteil ist, in die mindestens eine Kühlzone, die die zweite Atmosphäre aufweist,
- einen Gasaustausch zwischen mindestens einer Zone der Kammer, die die erste Schutzgasatmosphäre aufweist, und der mindestens einen Kühlzone, die die zweite Atmosphäre aufweist,
- in jeder Zone Messungen des Durchsatzes hereinströmenden Gases, des Drucks und des Wasserstoff- und/oder Heliumanteils, und
- mithilfe dieser Messungen, eine Steuerung des Durchsatzes der mindestens einen Einführung und der mindestens einen Injektion in Abhängigkeit von dem in den Zonen erforderlichen Druck der Kammer und den Wasserstoff- und/oder Heliumanteilen, die in der ersten und der zweiten Schutzgasatmosphäre zu erreichen sind.

2. Verfahren nach Anspruch 1, **dadurch gekennzeichnet, dass** es sich bei dem Schutzgas, das den dritten Wasserstoff- und/oder Heliumanteil enthält, um Wasserstoffgas, Heliumgas oder ein Gemisch davon handelt.

3. Verfahren nach Anspruch 1, **dadurch gekennzeichnet, dass** es sich bei dem Schutzgas, das den dritten Wasserstoffanteil enthält, um ein Gas handelt, das Wasserstoff und Stickstoff enthält und direkt aus einem industriellen Prozess stammt, ohne vorherigen Mischschritt.

4. Verfahren nach Anspruch 3, **dadurch gekennzeichnet, dass** es sich bei dem Gas, das Wasserstoff und Stickstoff enthält, um ein Ammoniak-Krackgas handelt.

5. Verfahren nach einem der Ansprüche 1 bis 4, **dadurch gekennzeichnet, dass** es die mindestens eine Einführung von Stickstoff in die Kammer nur außerhalb der mindestens einen Kühlzone, die die zweite Atmosphäre aufweist, umfasst.

6. Verfahren nach einem der Ansprüche 1 bis 4, **dadurch gekennzeichnet, dass** es die mindestens eine Einführung von Stickstoff in die Kammer gleichzeitig außerhalb der mindestens einen Kühlzone, die die zweite Atmosphäre aufweist, und in diese Zone umfasst.

7. Verfahren nach einem der Ansprüche 1 bis 6, **dadurch gekennzeichnet, dass** die erste Atmosphäre einen Wasserstoff- und/oder Heliumanteil von 3 bis 5 Volumen-% enthält.

8. Verfahren nach einem der Ansprüche 1 bis 7, **dadurch gekennzeichnet, dass** die zweite Atmosphäre einen Wasserstoff- und/oder Heliumanteil von 5 bis 25 Volumen-% enthält.

9. Verfahren nach einem der Ansprüche 1 bis 8, **dadurch gekennzeichnet, dass** der Druck in der Kammer 1 bis 3 mbar beträgt.

10. Verfahren nach einem der Ansprüche 1 bis 9, **dadurch gekennzeichnet, dass** es in der mindestens einen Kühlzone, die die zweite Atmosphäre aufweist, eine Ansaugung des Schutzgases in einen Rückführkreislauf, dessen Kühlung und dessen Einbringung in die Zirkulation in dieser mindestens einen Zone aus dem Kreislauf.

11. Verfahren nach einem der Ansprüche 1 bis 10, **dadurch gekennzeichnet, dass** der Gesamtdurchsatz des injizierten und eingeführten Atmosphärengases 400 bis 1000 Nm³/h beträgt und dass der Durchsatz des rückgeführten Gases das 1000- bis 5000-fache des Durchsatzes des injizierten und eingeführten Atmosphärengases beträgt.

12. Verfahren nach einem der Ansprüche 1 bis 11, **dadurch gekennzeichnet, dass** es, mittels der Steuerung des Durchsatzes, in der mindestens einen Kühlzone, die die zweite Atmosphäre aufweist, eine Aufrechterhaltung eines Drucks, der größer als der Druck der Kammer außerhalb dieser Kühlzone ist, umfasst.
